Europäisches Patentamt

European Patent Office

Office européen des brevets

(11) Veröffentlichungsnummer: **0 286 892**
**A1**

## EUROPÄISCHE PATENTANMELDUNG

(21) Anmeldenummer: 88104927.4

(22) Anmeldetag: 26.03.88

(51) Int. Cl.⁴ **F23J 15/00 , B01D 53/36**

(30) Priorität: 16.04.87 DE 3712977

(43) Veröffentlichungstag der Anmeldung:
**19.10.88 Patentblatt 88/42**

(84) Benannte Vertragsstaaten:
**BE ES FR GB IT LU NL SE**

(71) Anmelder: **LENTJES AKTIENGESELLSCHAFT**
**Hansa-Allee 305**
**D-4000 Düsseldorf-Oberkassel(DE)**

(72) Erfinder: **Rummenhohl, Volker**
**Bahnhofstrasse 135**
**D-4030 Ratingen 6(DE)**

(74) Vertreter: **König, Reimar, Dr.-Ing. et al**
**Patentanwälte Dr.-Ing. Reimar König**
**Dipl.-Ing. Klaus Bergen Wilhelm-Tell-Strasse**
**14 Postfach 260162**
**D-4000 Düsseldorf 1(DE)**

(54) Vorrichtung zum katalytischen Entsticken von Rauchgasen.

(57) Bei dieser Vorrichtung die ein Saugzuggebläse (5), einen Wärmetauscher (2), eine Zusatzbeheizung (6, 7) und einen Entstickungsreaktor (3) in einem Rauchgaskanal (1) aufweist, wird durch ein auf der heißen Seite (8) des Wärmetauschers (2) angeordnetes Saugzuggebläse (5) insbesondere ein Rohgasübertritt zur Reingasseite des Wärmetauschers (2) verhindert, sowie der Einsatz thermischer Energie verringert.

EP 0 286 892 A1

"Vorrichtung zum katalytischen Entsticken von Rauchgasen"

Die Erfindung betrifft eine Vorrichtung zum katalytischen Entsticken von Rauchgasen, mit einem Saugzuggebläse, einem Wärmetauscher, einer Zusatzbeheizung und einem Entstickungsreaktor in einem Rauchgaskanal.

Beim Verbrennen fossiler Brennstoffe enthält das Rauchgas neben Schwefeldioxyd auch Stickoxyde, die zu etwa 95 Vol.-% aus Stickstoffmonoxyd und zu etwa 5 Vol.-% aus Stickstoffdioxyd bestehen und nach den gesetzlichen Vorschriften zur Reinerhaltung der Luft bis zu einem festgelegten Restgehalt aus dem Rauchgas entfernt werden müssen. Dies ist unter anderem im Wege einer selektiven katalytischen Reduktion mit einem Ammoniak-Luft-Gemisch möglich, bei der die Stickoxyde mit Hilfe eines Katalysators in Anwesenheit von Sauerstoff zu molekularem Stickstoff und Wasserdampf umgesetzt werden. Der für die Umsetzung der Stickoxyde erforderliche Sauerstoff ist mit etwa 3 bis 8 Vol.-% im Rauchgas ausreichend enthalten. Probleme ergeben sich jedoch hinsichtlich der Reaktionstemperatur; denn nur im Temperaturbereich von etwa 300 bis 400°C läßt sich ein hinreichend hoher Reduktionsgrad, d.h. ein Rauchgas mit dem gesetzlich vorgeschriebenen Höchstgehalt an Stickoxyden erreichen. Hierzu wird das Rauchgas, das mit einer Temperatur von 150 bis 45°C aus einem Elektrofilter kommt, mit Hilfe eines Wärmetauschers, wie insbesondere ein Regenerativ-Gasvorwärmer oder ein Rekuperativ-Gasvorwärmer, auf eine Temperatur von z.B. 310°C vorgeheizt. Die Restaufheizung bis zur Reaktionstemperatur von z.B. 350°C wird durch eine Zusatzbeheizung erreicht, bspw. mittels Erdgas-oder Ölbrenner, Dampf, Wasser oder einem anderen Wärmeträgermedium.

Um den Einsatz der thermischen Energie zu verringern, ist es bekannt, das einem nachgeschalteten Katalysator zugeleitete kalte, feuchte Rohgas insbesondere dann in einem Regenerativ-Wärmetauscher mittels der Abgaswärme des zugehörigen Dampfkessels eines Dampferzeugers in Kombination mit einer zusätzlichen Wärmequelle wieder aufzuheizen, wenn der Katalysator nicht im heißen Roh-bzw. Rauchgasstrom des Kessels angeordnet wird. Im praktischen Betrieb werden in der Hauptsache regenerative Wärmetauschersysteme eingesetzt. Mittels der zusätzlichen Wärmequelle auf der heißen Seite der Gasmasse des Wärmetauschers wird dabei ein Temperaturpotential von ca. 30 bis 50°C geschaffen, d.h. die Temperatur der am heißen Ende austretenden und nach der Behandlung in dem nachfolgenden Prozeßteil wieder in den Wärmetauscher zurückgeführten Gasmasse wird aus diesem Potential entsprechend erhöht; aus dieser Temperaturdifferenz läßt sich das Wiederaufheizen des zuströmenden Gases mittels des heißeren ausströmenden Gases überhaupt erst ermöglichen und damit die zum Entsticken erforderliche Betriebstemperatur erreichen. Die Zusatzbeheizung erfordert allerdings einen großen Energieaufwand, wobei häufig kostbare Edelenergie verwendet wird, wie bei den üblichen Zusatzbeheizungen mit Gas oder Öl als Brennstoff für bspw. Kanalbrenner; die Kosten für die Zusatzbeheizung betragen ca. 40 % der gesamten Energiekosten.

Bedingt durch das natürliche Druckgefälle der mit unterschiedlichen Temperaturen im Gegenstrom durch den Wärmetauscher hindurchgeführten Gasströme, bspw. zwischen dem von der Rauchgasentschwefelungsanlage kommenden, mit niedriger Temperatur in den Wärmetauscher eintretenden Strom ungereinigten Gases und dem aus dem Entstickungs-Katalysator abströmenden gereinigten Gas mit höherer Temperatur, läßt sich insbesondere beim Einsatz eines Regenerativ-Gasvorwärmers als Wärmetauscher ein Schlupf ungereinigten Gases, d.h. Rohgases zur Reingasseite nicht vermeiden, wodurch der Wirkungsgrad des Katalysators deutlich belastet wird. Die Leckagen bei einem Regenerativ-Wärmetauscher liegen im Bereich von ca. 4 bis 15 % der mittels eines am kalten Ende des Wärmetauschers in einer Rauchgasleitung angeordneten Saugzuggebläses durch den Wärmetauscher gedrückten Menge ungereinigten Gases. Wegen der Belastung durch das Schlupfgas muß die Schadstoffkonzentration hinter dem Entstickungs-Reaktor somit niedriger sein, als der gesetzlich geforderte Wert; der Anlagenaufwand und die Betriebskosten erhöhen sich hierdurch.

Damit sich diese Leckagen vermeiden lassen, ist es bekannt, Sperrgassysteme einzusetzen. Hierbei wird Reingas unter hohem Druck auf die Dichtungen des Regenerativ-Wärmetauschers aufgegeben. Dies ist allerdings gleichbedeutend mit zusätzlich erforderlicher thermischer Energie und zusätzlichem Kraftbedarf für das oder die Sperrgasgebläse.

Zum Vorwärmen der Gase eignen sich außerdem Rekuperativ-Wärmetauscher, die Leckagen von lediglich ca. 1 % aufweisen. Gegenüber Regenerativ-Gasvorwärmern besitzen sie bei gleicher thermischer Leistung jedoch ein höheres Gewicht sowie ein großes Bauvolumen; außerdem treten hohe Druckverluste auf. Der Energiebedarf für die Zusatzbeheizung auf der heißen Seite des Rekuperativ-Gasvorwärmers ist ebenso groß wie bei einem Regenerativ-Gasvorwärmer.

Der Erfindung liegt die Aufgabe zugrunde, die vorerwähnten Nachteile beim Betrieb bekannter Wärmetauscher zu vermeiden und insbesondere einen Rohgasübertritt zur Reinseite eines Wärmetauschers zu verhindern, sowie den Einsatz thermischer Energie zu verringern.

Diese Aufgabe wird erfindungsgemäß dadurch gelöst, daß das Saugzuggebläse auf der heißen Seite des Wärmetauschers angeordnet ist. Durch diese Maßnahme wird erreicht, daß der Druck auf der entstickten Seite, d. h. im Reingasstrom größer ist als auf der unentstickten Seite, d.h. dem ungereinigten Rohgasstrom. Sowohl bei einem regenerativen als auch einem rekuperativen Gasvorwärmer strömt folglich allenfalls Reingas auf die Rohgasseite, was im Gegensatz zum Schlupf von Rohgas auf die Reingasseite völlig unproblematisch ist. Es bedarf somit keines Sperrgassystems oder anderer aufwendiger Vorsorgemaßnahmen mehr, um Leckagen des Rohgases zur Reingasseite zu unterbinden. Da kein Rohgas, d.h. ungereinigtes Gas mehr in den entstickten Reingasstrom eintreten kann, braucht die Schadstoffkonzentration im Reingasstrom hinter dem Reaktor nur dem gesetzlich vorgeschriebenen Wert zu entsprechen. Das Katalysatorvolumen läßt sich kleiner wählen, da keine Belastung der Schadstoffkonzentration von der Rohgasseite her mehr vorliegt.

Die Erfindung beruht außerdem auf dem Gedanken, die von jedem Saugzuggebläse durch Reibungswärme bewirkte Temperaturerhöhung des Rauchgases nicht ungenutzt zu lassen, son dern zur Reduzierung des Gesamt-Energiebedarfes und damit der Energiekosten einzusetzen. Bei einem in einer Rohgasleitung auf der kalten Seite eines Gasvorwärmers angeordneten Saugzuggebläse geht der von dem Gebläse bewirkte Temperaturanstieg und damit diese Energie verloren, denn die Austrittstemperatur des im Gegenstrom im Wärmetauscher aufgeheizten Rohgases erhöht sich hierdurch nicht entsprechend. Hingegen läßt sich die Temperaturerhöhung des Rohgases durch das erfindungsgemäß auf der heißen Seite des Wärmetauschers angeordnete Saugzuggebläse zur Reduzierung der Energiezufuhr für die Zusatzbeheizung ausnutzen. Das wird an dem folgenden Beispiel deutlich, bei dem das Rohgas mit bspw. 310°C aus dem Gasvorwärmer tritt und durch das Gebläse um ca. 10°C auf eine Temperatur von somit 320°C gebracht wird; wenn für den Stickoxyd-Katalysator eine Temperatur von 350°C benötigt wird, bedeutet das, daß von außen nur noch die thermische Energie über die Zusatzbeheizung zugeführt werden muß, die zum Aufheizen des Rohgases von 320°C auf 350°C benötigt wird. Die durch die Zusatzbeheizung auszugleichende Temperaturdifferenz beträgt somit lediglich noch 30°C und nicht mehr 40°C, d.h. immer ca. 10°C weniger als beim Stand der Technik; die Energiekosten für die Zusatzbeheizung reduzieren sich damit um ca. 25 %. Der bedingt durch ein größeres Gasvolumen höhere Energiebedarf für ein auf der heißen Seite des Wärmetauschers angeordnetes Saugzuggebläse steht in keiner Relation zu den, rechnerisch belegten, großen Energieeinsparungen für die Zusatzbeheizung.

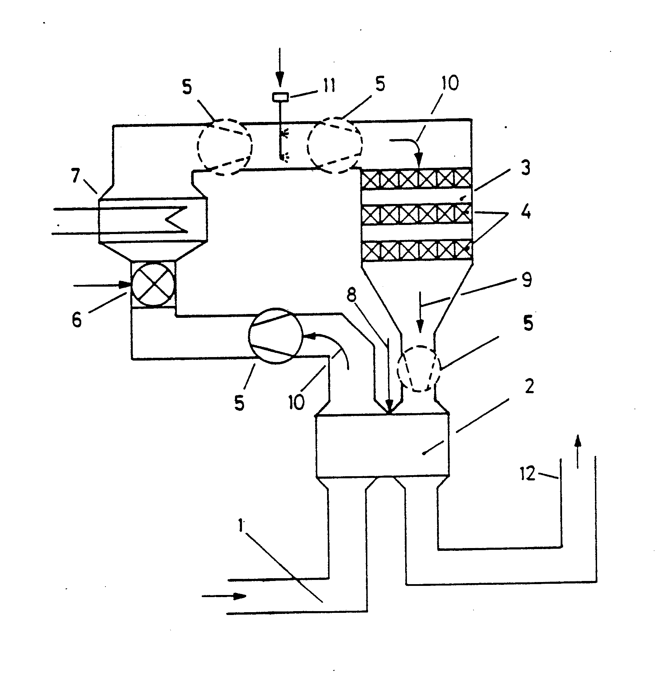

Die Erfindung wird nachfolgend anhand eines in der Zeichnung als Schema dargestellten Ausführungsbeispiels des näheren erläutert.

In einer Leitung 1 werden Rohgase mit einer Temperatur von ca. 50°C durch einen Gasvorwärmer 2 zu einem Entstickungsreaktor 3 mit mehreren Katalysatorbühnen 4 geführt. Für den nötigen Saugzug der Rohgase sorgt ein auf der heißen Seite des Gasvorwärmers 2 angeordnetes Gebläse 5. Das Saugzuggebläse 5 kann, wie mit durchgezogenen Linien dargestellt, zwischen dem Gasvorwärmer 2 und einer Zusatzbeheizung 6 bzw. 7, oder alternativ, wie jeweils gestrichelt dargestellt, hinter der Zusatzheizung 6, 7 oder vor oder hinter dem Entstickungsreaktor 3 angeordnet werden.

Der mittels des Gebläses 5 durch den Gasvorwärmer 2 gesaugte Rohgasstrom wird im Gasvorwärmer 2 im Gegenstrom aufgeheizt, d.h. der an der heißen Seite 8 des Gasvorwärmers 2 mit einer Temperatur von bspw. 320°C in den Gasvorwärmer 2 eintretende entstickte Reingasstrom (vgl. Pfeil 9) heizt den Rohgasstrom bis 280°C auf. Der gemäß Pfeil 10 in der Rohgasleitung 1 zum Entstickungsreaktor 3 strömende Rohgasstrom wird von dem auf der heißen Seite 8 des Gasvorwärmers 2 angeordneten Saugzuggebläse 5 um ca. 10°C, d.h. bei der vorgenannten Ausgangstemperatur von 280°C auf 290°C erwärmt; das weitere Aufheizen des Rohgases auf die für eine wirkungsvolle Entstickung erforderliche Temperatur von bspw. 320°C übernimmt die als Wärmeträger - oder Dampfwärmeaustauscher abgebildete Zusatzbeheizung 6, oder die mit einem Erdgas-oder Ölbrenner ausgebildete Zusatzbeheizung 7; alternativ lassen sich beide Arten der Zusatzbeheizung vorsehen.

Im Anschluß an die Zusatzbeheizung 6, 7 ist in der Rohgasleitung 1 ein Sprühsystem 11 zum Eindüsen des Ammoniak/Luft-Gemischs für das katalytische Entsticken des Rauchgases an geordnet. Die entstickten, durch den Wärmetausch im Gasvorwärmer 2 auf eine Temperatur von 90°C gekühlten Reingase werden über einen Kamin 12 in die Atmosphäre abgeleitet.

Bedingt durch das erfindungsgemäß auf der heißen Seite 8 des Gasvorwärmers 2 angeordnete Saugzuggebläse 5 läßt sich somit einerseits Fremdenergie einsparen, denn die Temperaturerhöhung des Rohgases durch das Gebläse kann voll ausgenutzt werden, und andererseits im Gasvorwärmer 2 ein Schlupf ungereinigten Rohgases zur Reingasseite verhindern, denn der auf der Reingasseite höhere Druck bewirkt allenfalls einen Schlupf von Reingas in den Rohgasstrom, was völlig unschädlich ist.

## Ansprüche

1. Vorrichtung zum katalytischen Entsticken von Rauchgasen mit einem Saugzuggebläse (5), einem Wärmetauscher (2), einer Zusatzbeheizung (6; 7) und einem Entstickungsreaktor (3) in einem Rauchgaskanal (1) dadurch gekennzeichnet, daß das Sangzuggebläse (5) auf der heißen Seite (8) des Wärmetauschers (2) angeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | B.W.K. BRENNSTOFFE-WÄRME-KRAFT, Band 38, Nr. 1/2, Februar 1986, Seiten FR19-FR25, Düsseldorf, DE; J. BECKER: "Möglichkeiten der Stickstoffoxidminderung durch SCR-Anlagen" * Seite FR24; Spalte 1; Spalte 2, Absatz 1; Figur 15 * --- | 1 | F 23 J 15/00 B 01 D 53/36 |
| X | EP-A-0 189 917 (BABCOCK-HITACHI) * Seite 2, Zeilen 15-24; Seite 3, Zeilen 5-8; Seite 4, Zeilen 12-26; Figur 15 * --- | 1 | |
| X | GB-A-1 544 169 (HITACHI) * Seite 1, Zeilen 21-40,47-63; Figur 1 * ----- | 1 | |
| | | | **RECHERCHIERTE SACHGEBIETE (Int. Cl.4)** F 23 J |

Der vorliegende Recherchenbericht wurde für alle Patentansprüche erstellt

| Recherchenort | Abschlußdatum der Recherche | Prüfer |
|---|---|---|
| DEN HAAG | 28-07-1988 | PHOA Y.E. |

EPO FORM 1503 03.82 (P0403)